# EUROPEAN PATENT APPLICATION

(11) **EP 2 109 046 A1**
(43) Date of publication of application: **14.10.2009**
(21) Application number: 08006936.2
(22) Date of filing: 07.04.2008
(51) Int. Cl.: G06F 17/27, G06F 3/023

(54) **Predictive text input system and method involving two concurrent ranking means**

(71) Applicant: ExB Asset Management GmbH, 80333 München (DE)
(72) Inventor: Assadollahi, Ramin O, 80333 München (DE)
(74) Representative: MERH-IP Matias Erny Reichl Hoffmann

(57) **Abstract**

The present invention relates to a text input device and a method for inputting text. The method comprises the step of predicting a ranked list of candidate words for text input, based on textual context. In a next step, the method displays the list of candidate words in alphabetical order, i.e. not according to the ranking determined by the prediction algorithm. Instead of indicating the ranking of a candidate word by its relative position within the list of candidate words, the method indicates the ranking of the candidate words by visual prominence. In response to the displayed list of candidate words, the method proceeds in receiving a user input regarding the intended word.

## Description

The present invention relates to a text input device and a method for inputting text, and a computer program for performing the method. More particularly, the present invention relates to a device such as a personal digital assistant or cellular telephone which incorporates a method for entering a word based on a contextual input text prediction.

The use of miniature computers such as personal digital assistants (PDA) and cellular devices capable of text messaging and text based communication has become increasingly popular. Email and SMS are examples of modem communication means which are widely used. Such miniature devices include correspondingly miniature sized input mechanisms. Typically PDA's and the like utilize a miniature keyboard or a multi-tap data entry mechanism. The miniature size of the input mechanism makes it impractical to enter large amounts of text, and it is desirable to minimize the number of keystrokes necessary to enter text. Entering a message text is in particular burdensome on small handheld devices which do not have a full standard keyboard such as mobile/cellular phones, PDAs, wireless devices, pagers, etc. In devices with only numeric keypads, every key is assigned to multiple letters and the user has to select the desired letter by pressing the corresponding digit key multiple times (multi-tap approach).

One approach to ease text input is to employ a dictionary of known words. The user presses the digit keys corresponding to the letters of the word only once (single-tap approach). Based on already entered keys, the system searches for dictionary words that match the entered key sequence and displays a matching candidate from the dictionary. The user continues until keys for all letters of the intended word have been entered. In the optimal case, the correct word is directly displayed as proposed candidate. Otherwise, the user can go through the other dictionary words matching the entered key sequence in order to search the intended word. Quite often the intended word is not listed in the dictionary and needs to be entered separately using the multi-tap approach.

When selecting the intended word from matching dictionary words, the candidates are usually presented individually and sequentially in the form of a linear list. Thus, many cursor key strokes may be necessary to scroll down the list starting from the system proposed candidate to reach and select the intended word. This makes entering text still a laborious task for users of handheld devices.

When the input method comprises a word prediction component that predicts words depending on the context of the text written so far, there is also a problem of efficiency: A prediction algorithm will always predict multiple candidate words for a given context, usually these candidate words will be ranked by some score indicating their appropriateness for the present context. If these words are given in a candidate list, the user has to scroll down the list in order to highlight the word and click OK to select it. Apart from requiring a substantial number of scroll operations, the display of the list of candidate words according to their ranking makes it difficult and cumbersome for a user to identify the word which he intends to enter from the list. This is particularly problematic, if the list of candidate words exceeds the capacity of the display and/or if the intended word is in a lower ranking position. The present invention solves this problem and provides a user with means to select an intended word from a set of candidate words in a less cumbersome, a more ergonomic and a faster way.

According to an aspect of the invention, an input method for entering an intended word is disclosed. The method comprises the step of predicting a ranked list of candidate words for text input, based on textual context. By way of example, the textual context may be a sequence of words preceding the intended word, which is the word that the user intends to write. Based on the sequence of words preceding the word that the user intends to write, a possible list of candidate words is determined using text prediction techniques. Such a list of candidate words may be ranked, e.g. according to their probability in view of the preceding textual context.

In a next step, the method displays the list of candidate words in alphabetical order, i.e. not according to the ranking determined by the prediction algorithm. Instead of indicating the ranking of a candidate word by its relative position within the list of candidate words, the method indicates the ranking of the candidate words by visual prominence. In response to the displayed list of candidate words, the method proceeds in receiving a user input regarding the intended word.

According to another aspect of the invention, the user input may comprise the selection by the user of the intended word from the displayed list of candidate words. If this is the case, then the selected word may be displayed on a device display within the respective application, e.g. a text editing application. Possibly a blank may be inserted before and/or after the inserted word in order to separate it from the preceding and succeeding words. As a result of a new word being inserted into the application, the textual context is updated and the method may reiterate with the input of a new intended word based on the updated textual context.

Alternatively, the user input may comprise a character input at a current position within the candidate words. The user may not be able to find the intended word within the displayed list of candidate words and in order to specify his search, the user might therefore be inclined to enter the first or - if the method has already been iterated - a following character of the intended word. Based on the character input, the method disclosed above may be reiterated using modified steps. An updated list of candidate words may be displayed in alphabetical order, wherein the initial list of candidate words is restricted in accordance to the character input. By way of example, the restriction of the list of candidate words in accordance to the character input may be performed by filtering the candidate words from the list of candidate words that comprise the character at the current position. In other words, only the candidate words which contain the inputted character at the particular current position will be displayed within the updated list of candidate words. In case the user has already input a sequence of characters, then only the candidate words that commence with this particular sequence of characters may be displayed in an updated list of candidate words.

As in the preceding case, the ranking of the candidate words may be indicated by visual prominence. However, in addition information regarding the current position of the character within the candidate words may be provided. In a following step the method may comprise the step of receiving a further user input regarding the intended word in response to the displayed updated list of candidate words.

According to a further aspect of the invention, a variety of prediction techniques may be employed in order to determine the ranked list of candidate words. Such prediction methods may make use of the recency, the bigram frequency, the trigram frequency and/or grammar aspects. A prediction method may predict the next word the user will input, referred to as the intended word, based e.g. on the preceding words or delimiters which are referred to as the context. It is notable, that the context may also arise from the type of application receiving the text or the type of text field receiving the text. In the first case, the application may give a hint to what kind of style the user will use (SMS, short message service: colloquial writing vs. word processor: formal writing). In the second case, unique identifiers may be assigned to certain text fields such as "name", "address", etc. This information may be used to activate a different dictionary containing all names, addresses, cities etc.

According to another aspect of the invention, the indication of the ranking of the candidate words by visual prominence may be implemented by a variety of means, such as the font size, the font type, the color, the hue, the background color or tone, the saturation and/or the grey tone levels of the displayed candidate words. It may also be beneficial to restrict the display of visual prominence to only a part of the candidate words.

Furthermore, the extent of the visual prominence may depend on the estimated probability of displayed candidate words. By way of example, a number one ranked candidate word having a probability of 50% may be displayed with higher visual prominence, e.g. a larger font size, than a number one ranked candidate word having a probability of only 20%. Consequently, the extent of the visual prominence may not only indicate the relative ranking of a candidate word with respect to the other candidate words, but it may also indicate the absolute probability or importance of a particular candidate word. For instance, the font size of a displayed candidate word may depend on the predicted likelihood that the candidate word follows the present context. Preferably, a score for each candidate word is predicted. The score may represent the likelihood of the candidate word following the present textual context and may be calculated based on word statistics of a text corpus, e.g. word counts. For instance, word bigram or trigrams may be estimated and the score may be a function of the determined statistics. The extent of the visual prominence may further depend on the score of the displayed candidate words so that a candidate with a higher score has a more visual prominence than a lower scored candidate. This may indicate, in addition to the ranking of the candidates, their relative importance. For instance, closely scored candidates may have a similar visual prominence, even when ranked, and very differently scored subsequently ranked candidates may receive a corresponding different prominence to visually indicate the user that they are not equally likely in the present context.

If, instead of selecting an intended word from the list of candidate words, a user enters a character, it may be important to indicate the current position the entered character holds within the candidate words. If already a sequence of characters has been entered, then it may be beneficial to indicate the current position of the sequence of characters within the candidate words. This may be important so that the user knows which letter to enter next. An indication of the current position may be provided in a number of ways, such as underlining of the characters of the candidate words that have already been input. Alternatively or in addition, one may also limit the indication of the ranking of the candidate words by visual prominence to the character of the words following the last character that has been input, or to all the characters of the words following the last character that has been input or to all the characters of the words following the last character that has been input, while not displaying the characters that have already been input.

The invention may be used in conjunction with a variety of devices. By way of example, a system according to the invention may implement all means for displaying and for receiving user input on a single touch-screen. In such a case, the textual context, the list of candidate words as well as the user input means could be provided on a single touch-screen.

The device may also use a physical keyboard for the user input, such as a traditional computer keyboard or a miniature keyboard provided on handheld devices, and use a non-touch screen or a touch-screen to display the textual context and the list of candidate words. If the list of candidate words is displayed on a touch-screen, then the user may select an intended word using a touching device, e.g. a pen or his finger. On the other hand, the selection of an intended word may also be implemented using navigational keys on the physical keyboards (such as arrow keys and the enter key) or using a mouse or other physical navigational input means.

The invention is particularly well suited for devices for which the means for displaying the candidate words and the means for receiving a text input are implemented on a touch screen. In such cases, the means for receiving a user input may be a virtual keyboard represented on the touch-screen. In order to ease the selection of candidate words from the list of candidate words, it may be beneficial to display the list of candidate words in a central position on the touch-screen. By way of example, the virtual keyboard may be split into lower rows and upper rows and the list of candidate words may be displayed in the center of the screen, between the upper and lower rows of the virtual keyboard.

The objects and features of the invention will become apparent from the following description of preferred embodiments. The present invention is described in the following by referring to exemplary embodiments illustrated schematically in the accompanying figures, wherein
Fig. 1 illustrates a conventional way for displaying a list of candidate words;
Fig. 2 illustrates an embodiment of the invention for displaying a list of candidate words;
Fig. 3 illustrates another embodiment of the invention for displaying a list of candidate words; and
Fig. 4 illustrates a block diagram of a possible operating environment of the present invention.

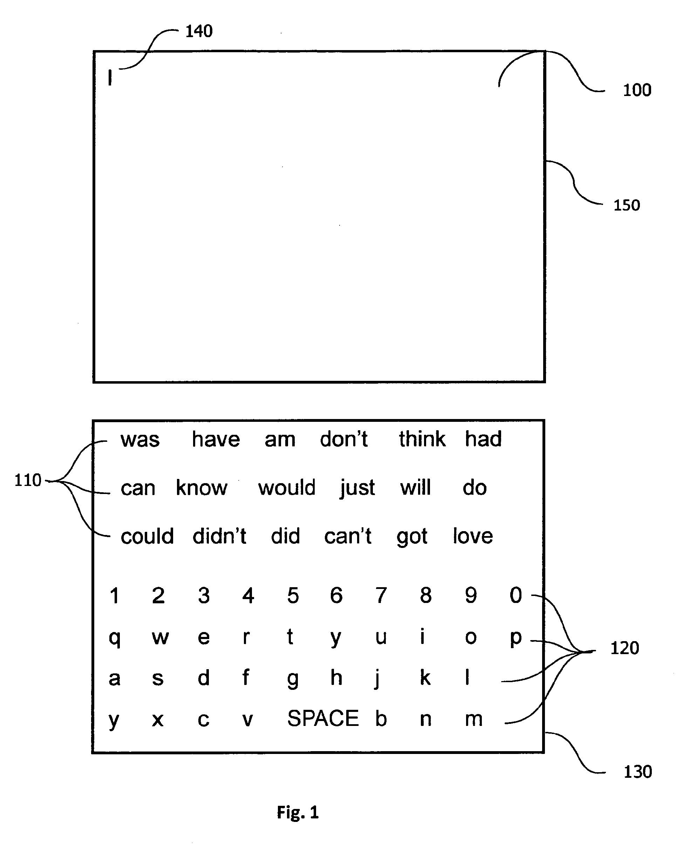

Fig. 1 shows an upper screen 150 and a lower screen 130. The upper screen 150 is used for a text-receiving application 100, such as a word editing application. The lower screen 130 is used for the representation of a virtual keyboard 120 and a list of candidate words 110. Preferably the lower screen 130 is touch sensitive in order to allow a user to select a key/character from virtual keyboard 120 and/or a word from the list of candidate words 110 using a pen or a finger.

The illustrated system comprises a prediction method that predicts words 110, referred to as candidate words, which result out of the computation from textual context 140. Candidate words 110 are presented to the user and the user can either select a word from these candidate words or enter a character on a virtual keyboard 120. As a result of entering a character on the keyboard 120 the set of candidate words may be further constrained. This may be beneficial, as the total list of candidate words may be longer than the number of words presented to the user, therefore requiring the user to e.g. scroll through such a long list of candidate words 110. When a word is selected, it is pasted to the text-receiving application 100, preferably together with a preceding and/or appended blank character. As a consequence of the pasting of the word into the application, the textual context 140 is changed, which leads to a new candidate list that represents appropriate follow-up candidate words 110 for the updated context. This updated list of candidate words 110 will be presented to the user and the described selection process can proceed with the next word. In this way, the user may enter a full text just by selecting whole words from a list of candidate words 110.

In the illustrated example the text-receiving application 100 has a current context 140 composed of the English word "I". Based on this context 140, a prediction algorithm may have generated a ranked candidate list 110 shown in Table 1:

**Table 1**

| rank | candidate word |
|---|---|
| 1 | was |
| 2 | have |
| 3 | am |
| 4 | don't |
| 5 | think |
| 6 | had |
| 7 | can |
| 8 | know |
| 9 | would |
| 10 | just |
| 11 | will |
| 12 | do |
| 13 | could |
| 14 | didn't |
| 15 | did |
| 16 | can't |
| 17 | got |
| 18 | love |

The prediction algorithm uses some sort of computational means to rank the candidate words 110, whereby one means could be the recency of use of the displayed words, but the means could also involve more complex methods such as bigram/trigram frequency or simple grammar. In more general terms, the prediction algorithm will exploit - among other things - the statistical structure of the English language possibly adapted to the linguistic preferences of the user. In a similar manner prediction algorithms may be applied to other languages.

Table 1 shows the list of candidate words 110 for the context 140 "I" following their rank order, i.e. the most probable word is shown at the top of the list followed by words with decreasing probability. In an analogous manner, this list of candidate words 110 is represented on the lower screen 130 following the ranking order of Table 1, i.e. the highest ranked word is shown first followed by the next ranked word, which is shown either within the same line, if there is still enough space on the display, or otherwise at the beginning of the next line.

The display of the list of candidate words 110 according to their rank order is disadvantageous in that is makes it difficult for a user to find the appropriate word within the list, as the list is not arranged in an ergonomic manner. If the list of candidate words 110 exceeds the available size of the screen 130, then finding the appropriate word is even more difficult. Therefore, it is an aspect of the present invention to combine the ranking obtained through the computation of a prediction algorithm with the reordering of the list of candidate words 110 according to their alphabetical order. This is shown in Table 2 containing the same list of candidate words as Table 1, however, in an alphabetical order:

**Table 2**

| alphabetic rank | computational rank | candidate word |
|---|---|---|
| 1 | 3 | am |
| 2 | 7 | can |
| 3 | 16 | can't |
| 4 | 13 | could |
| 5 | 15 | did |
| 6 | 14 | didn't |
| 7 | 12 | do |
| 8 | 4 | don't |
| 9 | 17 | got |
| 10 | 6 | had |
| 11 | 2 | have |
| 12 | 10 | just |
| 13 | 8 | know |
| 14 | 18 | love |
| 15 | 5 | think |
| 16 | 1 | was |
| 17 | 11 | will |
| 18 | 9 | would |

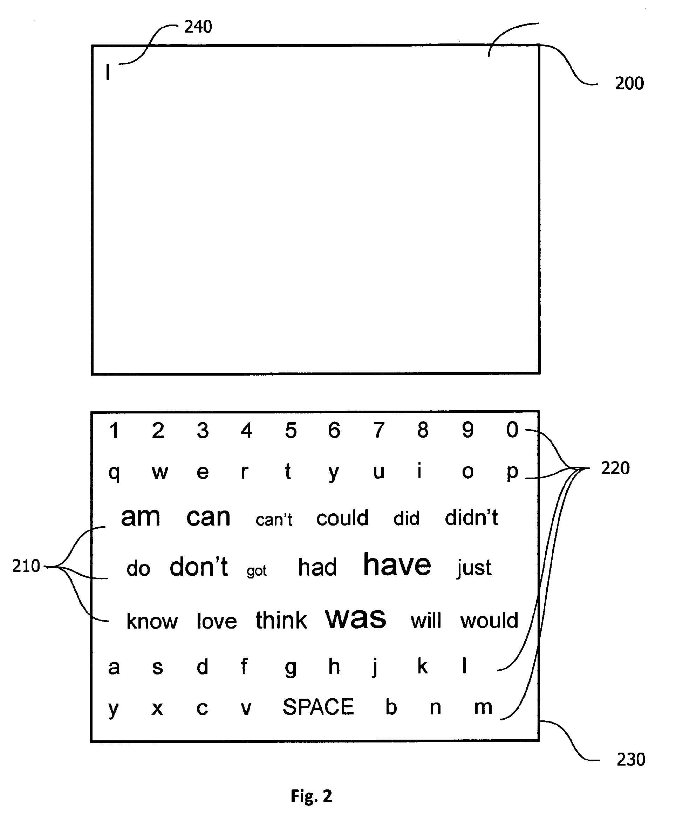

Fig. 2 illustrates how this alphabetically ordered list of candidate words 210 is displayed on the lower screen or user interface 230. In order to provide the user with information on the ranking of a candidate word, the ranking of a candidate word may be visualized by a variation in the candidate words' 210 visual features such as their size, as exemplified in Fig. 2. In the illustrated example, the candidate words 210 with the highest rank, such as the words "was" and "have", are displayed with a large font size, while the candidate words 210 with a low rank, such as the words "got" and "can't", are displayed with a small font size. Alternatively or in combination, other means for visualizing the ranking of the alphabetically ordered candidate words 210 are possible, such as color, hue, saturation or simply grey levels. In more general terms, candidate words 210 with higher computational ranks are presented in a visually more prominent and attention-grabbing form than lower ranking candidate words 210.

Alternatively only the computationally highest ranking n candidate words 210 may be presented in a prominent way, while the remaining candidate words 210 may be left to a standard form of presentation. By way of example, the top five candidate words 210 might be displayed with a font size 15, while the remaining visible candidate words 210 might be displayed with a font size of only 10.

Using the combination of displaying the list of candidate words 210 in an alphabetical order and the indication of the ranking of the candidate words 210 by emphasized prominence, the user has two different possibilities to find the intended word within the list. Either the user uses the prominence information by just visually looking at the most outstanding candidate words 210 or he uses the alphabetic order by looking at a place in the list, where he assumes the intended word to be according to its alphabetic position.

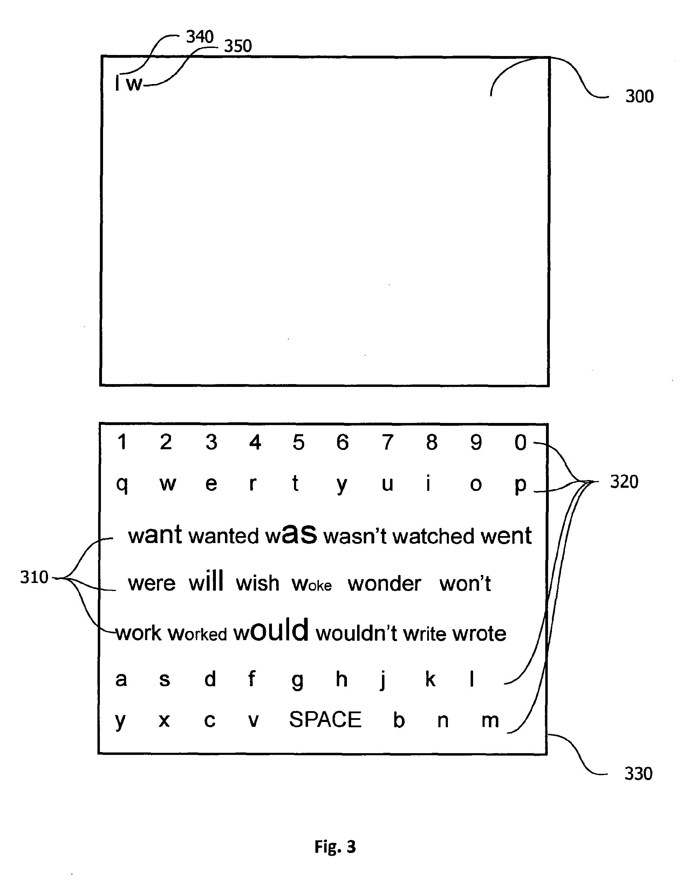

If instead of selecting a word from the list of candidate words 210, the user presses a letter on the virtual keyboard 220, the list of candidate words will be updated and possibly restricted according to a filter that is applied to the full list of candidate words 310. This is illustrated in Fig. 3. If, for example, the user presses the letter "w" 350 on the virtual keyboard 320 following the word "I" 340, the computationally ranked list of candidate words would be updated as shown in Table 3:

**Table 3**

| rank | candidate word |
|---|---|
| 1 | was |
| 2 | would |
| 3 | will |
| 4 | want |
| 5 | went |
| 6 | wanted |
| 7 | wish |
| 8 | wasn't |
| 9 | were |
| 10 | wouldn't |
| 11 | won't |
| 12 | wonder |
| 13 | wrote |
| 14 | watched |
| 15 | work |
| 16 | write |
| 17 | worked |
| 18 | woke |

In this situation, the alphabetic ordering of the list of candidate words 310 would be applied to the second letter in the words, as the first letter for all candidate words 310 is the same. This is shown in Table 4, which shows the alphabetically ordered list of candidate words 310:

**Table 4**

| alphabetic rank | computational rank | candidate word |
|---|---|---|
| 1 | 4 | want |
| 2 | 6 | wanted |
| 3 | 1 | was |
| 4 | 8 | wasn't |
| 5 | 15 | watched |
| 6 | 5 | went |
| 7 | 9 | were |
| 8 | 3 | will |
| 9 | 7 | wish |
| 10 | 18 | woke |
| 11 | 12 | wonder |
| 12 | 11 | won't |
| 13 | 15 | work |
| 14 | 17 | worked |
| 15 | 2 | would |
| 16 | 10 | wouldn't |
| 17 | 16 | write |
| 18 | 13 | wrote |

In such situations, it is important to give the user guidance on the current letter position within the intended word. The user interface has to provide the user with information on what the current letter position is within the words displayed in the list of candidate words 310. The user has to know what letter position of the intended word is to be entered next and based on which letter position in the list of candidate words 310, the alphabetic ordering of the list has been performed. Providing this information to the user may be done in several different ways. In the following examples, only the computationally top five ranking candidate words 310 have been made prominent:
1. The already entered part of the word may be underlined to indicate what the relevant next letter position is:
   "want", "wanted", "was", "wasn't", "watched", "went",
   "were", "will", "wish", "woke", "wonder", "won't"
   "work", "worked", "would", "wouldn't", "write", "wrote"
2. Only the relevant next letter position itself may be made prominent:
   "w**a**nt", "wanted", "was", "wasn't", "watched", "went",
   "were", "will", "wish", "woke", "wonder", "won't",
   "work", "worked", "would", "wouldn't", "write", "wrote"
3. Only the residual part of the word may be shown in a prominent way that indicates the computational ranks. This example of displaying the list of candidate words 310 is also illustrated in Fig. 3:
   "want", "wanted", "was", "wasn't", "watched", "went",
   "were", "will", "wish", "woke", "wonder", "won't",
   "work", "worked", "would", "wouldn't", "write", "wrote".
4. The already entered part of the intended word may be left out at the user interface 330 and may be presented within the receiving application 300. When presenting the candidate words 310, the residual part of the candidate words 310 may be shown in a visual prominent way:
   "ant", "anted", "as", "asn't", "atched", "ent",
   "ere", "ill", "ish", "oke", "ondet", "on't",
   "ork", worked", "ould", "ouldn't", "rite", "rote".'

One skilled in the art will acknowledge that combinations of the above as well as alternatives can be implemented without departing from the scope of the invention. When the user enters another letter, then the method disclosed above will be applied in an analogous way based on the newly entered letter.

The user interface disclosed in the present patent application is particularly useful when used for full touch-screens, as found for example on conventional PDAs and smartphones, where the text receiving application 100 may be on the same physical screen 130 as the virtual keyboard 120 and the list of candidate words 110. The user interface may also be used on devices that consist of two screens, i.e. a lower screen 130 being a touch-screen and an upper screen 150 which is not a touch-screen and which is used for displaying the text receiving application 100. In this case, the lower screen 130 is touchable and is thus able to have a dynamic and re-configurable user interface. An example for such a device having two screens may by the "Nintendo DS®", where DS stands for dual screen, by Nintendo Inc. or a device mentioned by Nokia Corporation in the US patent application US 2007/0268264 or by LG Corporation in the US patent application US 20070075915. The invention may also be used in devices that have only one display but a separate touch-sensitive flip as described in recent patent documents by Apple Inc, namely PCT patent application WO2008/030563 and US patent US 11470,579. These kinds of device have multiple advantages compared to candy bar shaped single-screen full touch-screen devices, notably due to their reduced size when folded.

Regarding the keyboard 110, 210, 310 a large variety of methods may be used in order to allow a user to enter individual letters. By way of example, QWERTY soft-keyboards, i.e. touch sensitive QWERTY keyboards that are presented on the touch-screen, half QWERTY soft-keyboards, i.e. virtual keyboards that have two letters on one virtual key such as "QW", "ER", "TY", virtual digit keypad like the conventional phone keypads, for which digit "2" corresponds e.g. to the letters "ABC", or hand-writing recognition software may be used. QWERTY and half-QWERTY keyboards may be presented in a standard fashion, i.e. all letters of the keyboard in one visual block as illustrated in Fig. 1, or they may be presented in a split fashion so that half of the virtual keys are above the list of candidate words and the other half of the virtual keys are below the list of candidate words as illustrated in Fig. 2. In a preferred embodiment, the list of candidate words 210 is positioned in a central, easy-to-access fashion, whereas the fall-back system, i.e. the virtual keyboard 220, which is only used when the intended word is not found within the visible list of candidate words, is presented in a less prominent fashion.

An alternative to the split keyboard illustrated in Fig. 2 may be to split the keyboard in an horizontal fashion so that the left part of the keyboard, i.e. the fractional lines with keys (q, w, e, r, t), (a, s, d, f, g) and (y, x, c, v), is situated on the left side of the screen, with the fractional lines displayed below one another. The right part of the keyboard is displayed in an analogous fashion on the right side of the screen, while the list of candidate words is shown in a prominent central position on the screen between the two keyboard parts. This layout may be particularly relevant for devices that are used in a landscape mode when open, such as the Communicator series by Nokia.

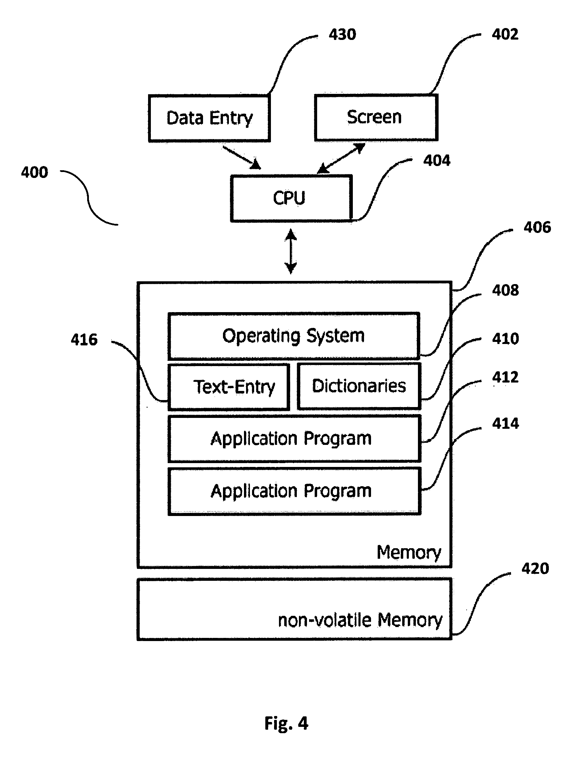

Fig. 4 is a block diagram of a possible operating environment of the present invention. The system 400 according to an embodiment of the present invention includes an input device 430 which may be a set of buttons, a keypad, a keyboard, a touch sensitive screen or the like which are referred to as means for receiving a user input 430. The system 400 further includes a display 402 for displaying the text entered as well as predicted words, i.e. the list of candidate words, the display 402 may be an LCD screen or the like, and in the case of a touch sensitive screen the display 402 may serve a dual purpose both as a display 402 and as the means for receiving a user input 430.

As further illustrated in Fig. 4, the system 400 includes a processor or central processing unit (CPU) 404 which executes commands via an operating system 408. The system 400 may include a plurality of application programs 412, an application which displays text 414 and one or more dictionaries 410.

It should be appreciated that the text recognition application 416, the display application 414, and one or more of the dictionaries 410 may be implemented as firmware or microcode stored on a non-volatile memory 420 such as an EPROM, EEPROM or the like. Use of the term "software" throughout this disclosure should be interpreted to include software implemented through firmware and stored on a non-volatile memory medium. The present system may be realized as software or firmware or the like, architecturally located between the operating system 408 of the computer 404 and the application 412 that receives text as input, e.g. a word processor.

The system 400 may be language specific and may have one or more dictionaries or vocabulary modules. The dictionary 410 and means for receiving user input 430 may be language specific. However, the software may allow for switching dictionaries and thus switching languages.

As outlined above, the present invention discloses a system and a method for text input. Using a contextual prediction algorithm, a list of candidate words, possibly comprising the intended word, is proposed to a user. By displaying the list of candidate words using two concurrent ordering means, the identification and selection of the intended word from the list of candidate words by the user is largely simplified. Instead of searching for the intended word in a ranked but unordered list of candidate words, the user is now able to identify the intended words based on both, prominence and alphabetic information, thereby easing and speeding up the identification and selection of the intended word. The disclosed method is particularly useful in combination with touch-screen devices.

The present invention is not limited to the disclosed exemplary applications. Other applications can benefit from the invention as well. This written description uses examples to disclose the invention, including the best mode, and also to enable any person skilled in the art to make and use the invention. While the invention has been described in terms of various specific embodiments, those skilled in the art will recognise that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art.

## Claims

1. An input method for an intended word, comprising the steps of:
- predicting a ranked list of candidate words for text input, based on textual context;
- displaying the list of candidate words in alphabetical order;
- indicating the ranking of the candidate words by visual prominence; and
- receiving a user input regarding the intended word in response to the displayed list of candidate words.

2. The method according to claim 1, wherein the user input comprises the selection by the user of the intended word from the displayed list of candidate words.

3. The method according to claim 1, wherein the user input comprises a character input at a current position within the candidate words and wherein the method reiterates the steps of:
- displaying an updated list of candidate words in alphabetical order, wherein the list of candidate words is restricted in accordance to the character input;
- indicating the ranking of the candidate words by visual prominence, while providing a further indication regarding the current position of the character within the candidate words; and
- receiving a further user input regarding the intended word in response to the displayed updated list of candidate words.

4. The method according to claim 3, wherein the restriction of the list of candidate words in accordance to the character input is performed by filtering the candidate words from the list of candidate words that comprise the input character at the current position.

5. The method according to any of the previous claims, wherein the predicting step uses at least one of recency, bigram frequency, trigram frequency and/or grammar aspects to determine the ranked list of candidate words.

6. The method according to any of the previous claims, wherein visual prominence is implemented by at least one of the following:
- font size of the displayed candidate words;
- font type of the displayed candidate words;
- color of the displayed candidate words;
- hue of the displayed candidate words;
- background color or tone of the displayed candidate words;
- saturation of the displayed candidate words; and
- grey tone level of the displayed candidate words.

7. The method according to any of the previous claims, comprising predicting a score for each candidate word, the score representing the likelihood of the candidate word following the present textual context, wherein the extent of the visual prominence further depends on the score of the displayed candidate words.

8. The method according to claim 6, wherein only a part of the candidate words are displayed using visual prominence.

9. The method according to claims 3, 4, 5, 6, 7 or 8, wherein the indication regarding the current character position is implemented by at least one of the following:
- underlining of the characters of the candidate words that have already been input;
- limiting the indication of the ranking of the candidate words by visual prominence to
* the character of the words following the last character that has been input;
* all the characters of the words following the last character that has been input; or
* all the characters of the words following the last character that has been input, while not displaying the characters that have already been input.

10. A system for text input of an intended word, comprising:
- means for displaying a textual context;
- means for predicting a ranked list of candidate words for text input, based on the textual context;
- means for displaying the list of candidate words in alphabetical order, while indicating the ranking of the candidate words by visual prominence; and
- means for receiving a user input regarding the intended word in response to the displayed list of candidate words.

11. The system according to claim 10, wherein all means for displaying and for receiving user input are implemented on a single touch-screen.

12. The system according to claim 10, wherein the means for displaying are implemented on a screen or touch-screen and wherein the means for receiving user input are implemented on a physical keyboard.

13. The system according to claim 10, wherein the means for displaying the candidate words and the means for receiving a text input are implemented on a touch screen.

14. The system according to claim 13, wherein the means for displaying the textual context are implemented on a screen separate from the means for displaying the candidate words and the means for receiving a text input.

15. The system according to claim 13 or 14, wherein the means for receiving a user input is a virtual keyboard.
